# EUROPEAN PATENT APPLICATION

(11) **EP 2 574 830 A1**
(43) Date of publication of application: **03.04.2013**
(21) Application number: 11007952.2
(22) Date of filing: 30.09.2011
(51) Int. Cl.: F16K 15/16

(54) **Valve for a fluid**

(71) Applicant: Robert Bosch GmbH, 70469 Stuttgart (DE)
(72) Inventor: Chavin Gazalier, Cyril, 74130 Bonneville (FR)
(74) Representative: Thürer, Andreas

(57) **Abstract**

A valve (1) for a fluid and especially a gaseous medium, with a housing (2), the housing (2) comprising a channel (4) through which the fluid may flow and a valve element (10) which is movable into at least two positions (P1, P2) with respect to the housing, wherein in the first (P1) of the two positions of the valve element (10) a flow of the fluid in a first flowing direction (D1) through the channel is essentially prevented and wherein in a second (P2) of the two positions (P1, P2) of the valve element (10) a flow of the fluid in a second flowing direction (D2) through the channel (4) is enabled. According to the invention the valve element (10) comprises a base section (12) attached to the housing (2) and a bendable seal section (14) made of an elastic material and connected to the base section (12), wherein the bendable seal section (14) extends at least partially into the channel (4) and wherein the bendable seal section (14) is movable by the fluid and wherein a bending of the bendable seal section (14) allows a passage of the fluid.

## Description

The present invention is directed to a valve for a fluid and especially a valve for a gaseous medium. Such valves are known in different embodiments from the state of the art. One type of known valves or poppet systems comprises a drilled sleeve and a moving O-ring. Other types of valves known from the state of the art comprise circular lip seals or a conventional ball poppet. Such seals are often relatively complicated. So for example the housing of those seals must be made of at least two parts wherein in the interior of the housing a spring is arranged together with a piston - like body. The lip seals on the other hand bring the disadvantage of being comparatively complicated and furthermore they have the risk of wear.

Another concept known from the state of the art comprises a rectangular plastic sheet in a two part cage. This concept has the disadvantage of a significant decreasing flow rate. Moreover, this solution requires a complex mounting.

The object of the invention is therefore to overcome the above described disadvantages of the state of the art. Into more detail, a valve is suggested, which is small compared to the valves known from the state of the art and which should also be low in cost. Moreover, the valve should allow essentially a blocking of a gaseous stream in one flow direction and should allow moreover essentially a free passage of the gas stream in the opposite flow direction.

These problems are solved by use of a valve according to claim 1. Advantageous embodiments are object of the sub-claims.

A valve for a fluid and especially for a gaseous medium according to the invention comprises a housing, wherein the housing comprises a channel through which the fluid may flow and a valve element arranged in the housing, which is moveable into at least two positions with respect to the housing, wherein in the first of the two positions of the valve element a flow of the fluid in a first flowing direction through the channel is essentially prevented and wherein in a second of the two positions of the valve element a flow of the fluid in a second flowing direction through the channel is enabled.

According to the invention the valve element comprises a base section, which is attached to the housing and a bendable seal section made at least partially and preferably completely from an elastic and especially and elastomeric material and which is connected to the base section, wherein the bendable section extends at least partially into the channel and wherein the bendable seal section is moveable by the fluid and wherein a bending of the bendable seal section allows a passage of the fluid (especially through the channel).

It is therefore preferably suggested to design the valve or a poppet with only one elastic especially elastomeric seal mounted on a body. A bending of this bendable seal section which will be also referred to as lip in the following allows compressed air in the second position to flow through the system, especially with a low flow rate drop. In the other position this bendable seal section avoids a flow of the fluid with a minimum leakage.

Therefore the first flowing direction of the fluid and the second flowing direction of the fluid are in an essential opposite direction to each other.

The base section is preferably fixedly attached to the housing. The bendable seal section extends preferably as far into the channel, that at least in one of the above mentioned positions it may completely prevent a fluid passage through the channel. The fluid is preferably a gaseous medium and the valve is preferably a pneumatic valve.

Preferably, the valve is a passive valve which means, that the bendable seal section is moved only under the influence of the fluid flowing through the valve. Also preferably the position of the bendable seal section inside the housing depends on the flow rate of the fluid. In another advantageous embodiment the valve element closes automatically i.e. if there is no flow of the fluid, the bendable seal section will be in the first of the two positions.

Preferably a bending of the bendable seal section allows a passage of the fluid. In another preferred embodiment a curvature of the bendable or flexible seal section changes if the flow of the fluid inside the channel changes.

In another preferred embodiment at least the bendable seal section is formed as one piece and very preferably the whole valve element is formed as one piece. This construction allows the manufacturing of the valve at low cost. So preferably the whole valve element is manufactured from one (especially uniform) material. Preferably the valve element is a molded element, for example an injection molded element.

In another embodiment, at least the bendable seal section has a flat shape. This means, that the bendable seal section extends in two directions which build up a plane and the extensions in the said two directions are much greater than an extension in a third direction which is perpendicular to the above-mentioned first and second directions. Preferably the third direction has at last a component extending in the flow direction of the fluid and very preferably the third direction extends under an angle with respect to the flow direction of the fluid, which is smaller than 20° preferably smaller than 10° and preferably smaller than 5°.

This third direction is therefore preferably the thickness of the seal section. Therefore the bendable seal section is preferably constructed as an elastic and especially elastomeric lip. For the concrete dimensions of the bendable seal sections different aspects have to be considered as for example the tightness, the amount of the flow rate, the cost and the life time.

The valve according to the invention allows cost-effective features especially in case of thin and long air channels for relatively high frequency applications. Moreover, the valve allows a very low opening pressure, a comparatively good flow rate and a limited wear of the sealing surface.

In another preferably embodiment the valve comprises a stop with which the bendable seal section is in contact in one position of the valve element and which limits a movement of the bendable seal section. Preferably, the position is the first position of the valve element in which the flow of the fluid in the first direction is prevented. Preferably, the stop is arranged as a at least partially circumferntial stop which therefore contacts the bendable seal sections in different areas of the same. This design of the stop avoids an air passage when the valve being in a closed position.

Especially the stop comprises several sections wherein at least two of these sections extend in different directions. Preferably these sections are connected to each other and most preferably build a continuous line, preferably have a beginning point and an ending point at a certain distance from the beginning point.

In another preferred embodiment the bendable seal section is pre-stressed towards the stop in a flow-neutral state of the valve. This means, if there is no flow through the valve, the bendable seal section preferably contacts the stop and therefore the valve in this state is in a closed position.

In another preferred embodiment the bendable seal section comprises a polygonal shape and especially a rectangular shape. This rectangular shape allows a very effective closing position of the valve.

In another preferred embodiment the valve comprises a fixing element to fix the valve element to the housing. In this embodiment the fixing element can be separated from the housing. Therefore it is possible to arrange the valve element to the housing and afterwards bring it into solid contact with or fix it by way of the fixing element. Further it would also be possible to fix the fixing element by an alternative method as for example screwing or gluing to the housing. In another embodiment the valve element comprises a receiving section to receive at least a part or a section of the fixing element. In another preferred embodiment the valve element is formed of a different material than the housing. Especially the valve element is more flexible than the material of the housing of the valve. Preferably the housing is made of a plastics material.

In another preferred embodiment the housing of the valve may comprise several of the above-mentioned valve elements. In another preferred embodiment the valve element is exchangeable ie. it may be removed from the housing without destruction of the housing and preferably even without even opening the housing.

In another preferred embodiment the fixing element is at least partially ball shaped and very preferably is a ball. Therefore also the valve element may comprise a receiving section which is able to receive the ball shaped fixing element which could be pressed into these receiving sections to allow an easy mounting of the valve element to the housing. Therefore the receiving section may comprise a ball shaped inner wall.

In another preferred embodiment the valve element is constructed such that it can be mounted into a housing without disassembling the housing itself. Therefore, especially the base section is wider in cross section as the bendable seal section. In another preferred embodiment the bendable seal section is bendable along its entire cross section.

In another preferred embodiment the base section is more easily bendable in a first bending direction than in an arbitrary second bending direction. Therefore certain bending modes are promoted and preferably other bending modes suppressed. This can be reached by the geometrical shape of the bendable seal section, but also by choice of the material used for it.

In another preferred embodiment the bendable seal section has a width which is basically constant in a length direction of the base section towards the opposite end of the bendable seal section or which decreases in this direction. This has the advantage that the valve element can be introduced more easily into a housing and that it is possible to replace the valve from the housing.

In another preferred embodiment of the invention the valve element is made from a material which is selected from a group of material which contains elastomeric material as for example PU (Polyurethane), NBR (Acrylonitrile-Butadiene Rubber), HNBR (Hydrogenated Acrylonitrile-Butadiene Rubber), CR (Polychloroprene Rubber), TPU (Thermoplastic Polyurethene), VMQ (Silicone Rubber), EPDM (Ethylene Propylene Tetrapolymer Rubber), FKM (Fluor carbon rubber), combinations of these materials and the like.

In another preferred embodiment a thickness of the bendable seal section is between 0,2mm and 20mm, preferably between 0,5mm and 15mm, preferably between 0,4mm and 10mm, preferably between 1,0mm and 10mm. The width of the bendable seal section is between 0,5mm and 50mm, preferably between 1,0mm and 40mm and the length of the bendable seal section is between 1 mm and 100mm, preferably between 3mm and 80mm.

In another preferred embodiment the length of the bendable seal section is at least 1,5 times as big as the width of the bendable seal section, preferably at least 2 times as big as the width of the bendable seal section. Therefore the bendably seal section will preferably bend only along its length direction and not along its width direction. Moreover the bendably seal section may comprise strengthening means, which prevent a bending of the bendable seal section along its width direction and only allow a bending of the bendable seal section along its length direction (ie. also a bending of the length direction itself arises as a consequence of the bending of the bendable seal section).

In another preferred embodiment the valve is a check valve, in the following also referred to as check-choke valve.

The present invention is also directed to an assembly comprising at least one valve of the above - described manner, wherein this valve is arranged in an exhaust channel of the assembly, especially to avoid a fluid and especially a gaseous medium to enter the assembly via the exhaust channel. The assembly may comprise a pneumatic subsystem which comprises at least one valve of the above-mentioned kind. Preferably the exhaust channel is a compressed air exhaust channel. Preferably the assembly is a check-choke module which serves to avoid backpressure phenomena on valve terminal system's exhaust to prevent valve malfunctions.

The valve according to the invention preferably prevents a backpressure from a pneumatic device to the valve assembly. However, a low flow rate under backpressure maybe acceptable.

The present invention is also directed to Valve element for a valve, the valve element comprising a base section mountable to a housing of the valve and a bendable seal section which is connected to the base section and which is at least partially movable with respect to the base section. According to the invention the base section of the valve element and the bendable seal section are formed as one piece from a flexible material, wherein the bendable seal section is bendable along a predetermined direction, and wherein a force required to bend the bendable seal section along the predetermined direction is lower than a force required to bend the bendable seal section along any other direction.

In a preferred embodiment the base section comprises a higher stiffness than the bendable seal section of the valve element.

Other advantages and embodiments are disclosed in the appended drawings in which
- Figs. 1a ― 1 e: show different views of a valve according to the invention in a closed position;
- Figs. 2a -2e: show different views of a valve according to the invention in an open position; and
- Fig. 3: illustrates the mounting of a valve element according to the invention to a housing.

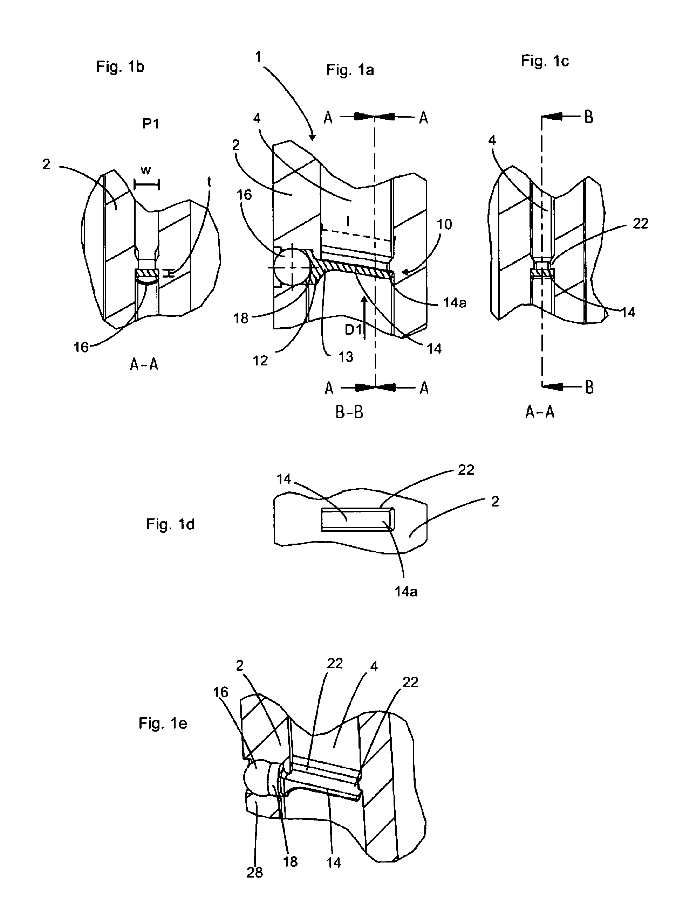

Figs. 1 a-1 e show five views of a valve 1 according to the invention. As shown especially in Figs. 1 a and 1 e, the valve 1 comprises a housing 2 which in its interior forms a channel 4 in which a fluid enters in the direction D1 or through which it may flow in the opposite direction D2. In Figs. 1a ―1e the valve is in a closed position, which means, that a flow of the fluid in the direction D1 is basically prevented by the valve 1. Reference numeral P1 refers to the first position of the valve element 10, which leads to the closed state of the valve.

Reference numeral 10 in its entirety refers to a valve element which is mounted to the housing 2. This valve element 10 comprises a base or base section 12, which is fixedly mounted to the housing 2 of the valve. Furthermore the valve element 10 comprises a bendable seal section 14 which is built as one piece with the base section 12. This bendable seal section 14 can be bend as becomes clear from a comparison of figs 1 a and 2a.

The valve element 10 furthermore comprises a receiving section 18 which receives a ball element 16. Into more detail, the ball element 16 is pressed into the receiving section 18 of the valve element 10 and since the receiving section 18, which is a part of the base section 12 is more flexible than the ball element 16, the base section 12 is pressed into an opening 29 of the housing 2.

The reference numeral I refers to a length of the bendable seal section 14, the reference numeral w (fig. 1 b) to a width of the bendable seal section 14 and the reference numeral t (fig. 1b) to a thickness of the bendable seal section 14. As can be seen especially in fig. 1e, the bendable seal section 14 is a flat element.

Reference numeral 13 refers to a transition area, in which connects the base section 12 to the bendable seal section 14. In this transition area 13 the thickness t of decreases or tapers in the direction of the bendable seal section 14. In the embodiment shown in the figures, the bendable seal section 14 comprises a constant thickness t along its length. However, it would also be conceivable, that the thickness t decreases especially continuously from the base section 12 to the right hand end of the bendable seal section 14 (fig. 1a). It would also be possible, that the bendable seal section 14 comprises along its length an area with a decreased thickness which would also be the area in which the bendable seal section is mainly bent.

Reference numeral 22 refers to a stop with which the bendable seal element comes at least into contact, if a flow of a fluid arises in the direction D1. This flow presses the bendable seal section 14 onto the stop 22 and therefore the bendable seal section 14 acts as a seal which prevents a flow of the fluid beyond the bendable seal section 14. As can be seen especially in fig. 1d, the stop (element) is shaped circumeferentially around the bendable seal section 14 or, in other words, in the situation shown in fig. 1d, the bendable seal section 14 completely closes the opening within the channel 4 which is partially surrounded by the stop 22.

As can be seen especially in fig. 1e, the bendable seal section 14 is completely arranged in the channel 4. Also the transition section 13 here is completely arranged in the channel 4. The base section is arranged in an opening 29, which is build in a wall 28 of the housing.

In a neutral state of the valve ie. if there is no flow of a medium or fluid through the channel 4, the bendable seal section is also biased which at least a weak force to the stop 22. Due to this arrangement, an immediate prevention of a flow also of a gas in the direction D1 can be reached. Therefore the bendable seal section or lip 14 will be pre-stressed towards the stop 22. This elastic bending of the bendable seal section 14 ensures a contact between the housing, especially an inner wall of the housing 2 and the bendable seal section 14.

If a flow arises now in the direction D1 this will help to press the bendable seal section 14 even further towards the stop 22 so that a perfect tightness to gas is achievable. The material of the valve element 10 and especially of the bendable seal section is selected such that it can work with temperatures in a range from -10°C to 60° C and preferably with temperatures in a range from -30°C to 220°C.

In the embodiment shown in the figures, a ball 16 is used to fix the valve element to the housing 2 and to ensure tightness between inside and outside. This means, that the ball 16 (more general the fixing element) also brings the advantage that no flow of the fluid will exit the valve through the opening in the wall 28 of the housing 2. With regards to different sizes and/or mounting conditions also other measures could be taken to fix the valve element to the housing 2 as for example pressed - in plugs, screwed - in plugs, glued - in plugs, covers or the like.

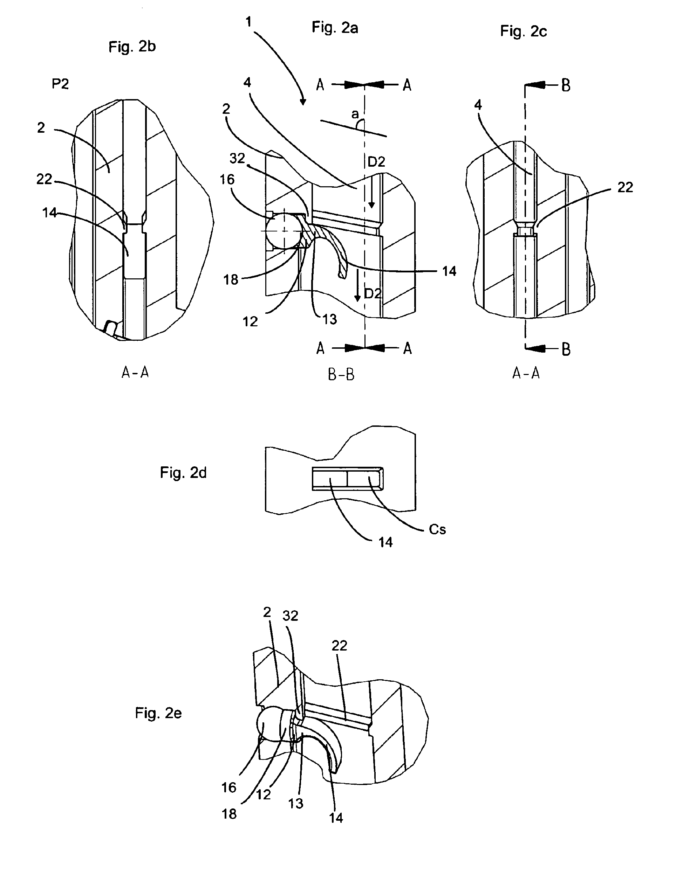

As can be seen especially in fig. 1a, the bendable seal section 14 is not exactly horizontal but inclined with respect to a horizontal plane. In other words, the beginning section of the bendable seal section 14 which is arranged next to the base section 12 is slightly higher than the distal section 14a of the bendable seal section 14. Due to this arrangement a fluid flowing in the direction D2 (see fig. 2a) will be guided to the distal end 14a of the bendable seal section or respectively to the respective distal inner wall of the channel 4 which allows an easier opening of the valve if a flow arises in direction D2.

Preferably an angle a between the flow direction D2 and the length direction I is between 70° and 90°, preferably between 80° and 90° and most preferably between 85° and 90°.

Figs. 2a - 2d show the valve 1 of figs. 1a ― 1 e but in an open state of the valve, especially of a flow of the fluid arises in a direction D2 which is opposite to direction D1. In this situation the bendable seal section 14 will bend as best shown in fig. 2a under the force of the medium, which flows in direction D2. As can be seen especially in fig. 2a and 2e, the bendable seal section 14 bends along basically its entire length and due to this bending an opening with the cross section arises Cs (fig. 2d) through which the fluid may pass. As soon as this flow vanishes, the bendable seal section will move back into the situation shown in figs 1a - 1e (due to elastic forces of the bendable seal section 14).

Reference symbol P2 denotes the second position of the valve element in which a flow of the fluid is enabled. However, the bendable seal section may also take more positions apart from the two shown positions P1 and P2. Preferably the bendable seal section may take any position between the two positions shown in the drawings.

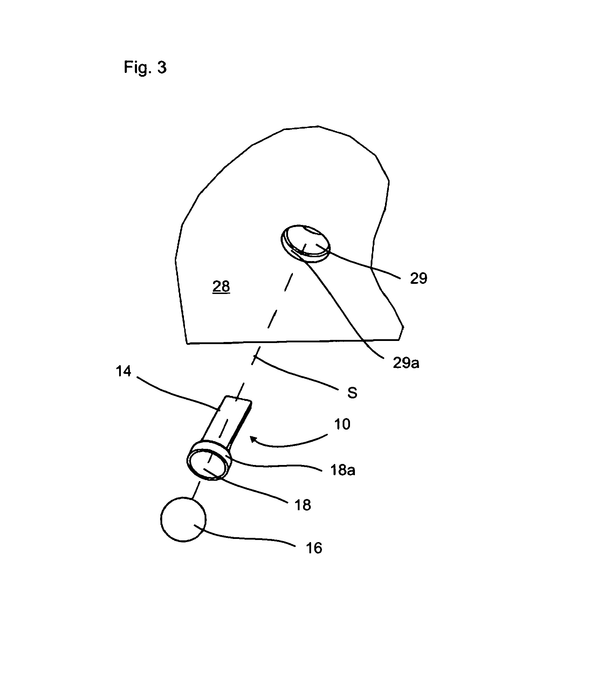

With reference to fig. 3 the mouting of the seal element 10 is described. The seal element 10 is guided into an opening 29 built in the housing 2, more into detail in a side wall 28 of the housing. The base section 18 is shown here having a circular cross section. However, it might also be conceivable, that an outer cross section of the base element has a non circular cross section and also the inner cross section of the opening is respectively non circular, so that the base section or the receiving section can only be put into the opening 29 in a defined orientation.

Also the valve element 10 or the receiving section may comprise a protrusion at the outer circumference 18a which may counteract with a groove in the wall 29a of the opening 29 (or vice versa) so that also the orientation of the valve element would be predefined. However, it is also possible that the mentioned defined orientation of the valve element 10 (with respect to the axis S) will be reached by the stop shown in figs. 1a - 1d which only allows a predefined arrangement of the valve element 10 in the opening. Therefore preferably means are provided which only allow the mounting of the valve element 10 to or into the housing 2 in a predefined position.

The housing 2 furthermore comprises a seat 32 to receive the base section 12 of the valve element, wherein this seat 32 preferably prevents the base section 12 from sliding or falling into the channel 4. Therefore the seat 32 preferably has a cross section, which is bigger than a cross section of the bendable seal section 14 but which is small than a cross section of the base section 12. Furthermore preferably a cross section of the base element is bigger than a cross section of the bendable seal section.

After the valve element 10 has been introduced into the opening, the ball element 16 is pressed into the receiving section 18 and presses the receiving section against the boundary walls 29a of the opening 29. The ball element 16 may comprise gripping elements, which allow to remove the ball element 16 again from the receiving section 18 of the valve element 10.

### List of reference numerals

- 1: valve
- 2: housing
- 4: channel
- 10: valve element
- 12: base section
- 13: transition area of valve element 10
- 14: bendable seal section
- 14a: distal end of bendable seal section
- 16: fixing element, ball
- 18: receiving section of the housing 2
- 18a: outer circumference of receiving section
- 22: stop
- 28: wall of housing
- 29: opening
- 29a: wall of the opening
- 32: seat

- I: length of bendable seal section
- w: width of bendable seal section
- t: thickness
- D1, D2: flow direction of fluid
- P1, P2: positions of the valve element
- S: axis
- a: angle

## Claims

1. Valve (1) for a fluid and especially a gaseous medium, with a housing (2), the housing (2) comprising a channel (4) through which the fluid may flow and a valve element (10) which is movable into at least two positions (P1, P2) with respect to the housing (2), wherein in the first (P1) of the two positions of the valve element (10) a flow of the fluid in a first flowing direction (D1) through the channel is essentially prevented and wherein in a second (P2) of the two positions (P1, P2) of the valve element (10) a flow of the fluid in a second flowing direction (D2) through the channel (4) is enabled, **characterized in that**
the valve element (10) comprises a base section (12) attached to the housing (2) and a bendable seal section (14) made of an elastic material and connected to the base section (12), wherein the bendable seal section (14) extends at least partially into the channel (4) and wherein the bendable seal section (14) is movable by the fluid and wherein a bending of the bendable seal section (14) allows a passage of the fluid.

2. Valve (1) according to claim 1,
**characterized in that** the valve element (10) is formed as one-piece.

3. Valve (1) according to at least one of the preceding claims,
**characterized in that**
the valve (1) comprises a stop (22) with which the bendable seal section (14) is in contact in one position (P1) of the valve element (10) and which limits a movement of the bendable seal section (14).

4. Valve (1) according to claim 3,
**characterized in that**
the bendable seal section is pre-stressed towards the stop in a flow-neutral state of the valve.

5. Valve (1) according to at least one of the preceding claims,
**characterized in that**
the valve (1) comprises a fixing element (16) to fix the valve element (1) to the housing (2)

6. Valve element (1) according to claim 5,
**characterized in that** the valve element (10) comprises a receiving section (18) to receive at least a section of the fixing element (16).

7. Valve element (1) according to claim 4,
**characterized in that**
the fixing element (16) is at least partially ball-shaped

8. Valve (1) according to at least one of the preceding claims,
**characterized in that**
the valve element (10) is made from a material which is selected from a group of materials, which contains PU, NBR, HNBR, CR, TPU, VMQ, EPDM, FKM, combinations thereof and the like.

9. Valve (1) according to at least one of the preceding claims,
**characterized in that**
a thickness of the bendable seal section is between 0,2mm and 20mm, preferably between 0,4mm and 10mm.

10. Valve (1) according to at least one of the preceding claims,
**characterized in that**
the valve (1) is a check valve.

11. Valve element (10) for a valve (1), comprising a base section (12) mountable to a housing of the valve (1), and a bendable seal section (14) which is connected to the base section (12) and which is at least partially movable with respect to the base section (12),
**characterized in that** the base section (12) and the bendable seal section (14) are formed as one piece from a flexible material, wherein the bendable seal section (14) is bendable along a predetermined direction, and wherein a force required to bend the bendable seal section along the predetermined direction is lower than a force required to bend the bendable seal section along any other direction.

12. Valve element (10) according to claim 11,
**characterized in that** the base section (12) comprises a higher stiffness than the bendably seal section (14).
